# EUROPEAN PATENT APPLICATION

(11) **EP 0 774 738 A2**
(43) Date of publication of application: **21.05.1997**
(21) Application number: 96116923.2
(22) Date of filing: 22.10.1996
(51) Int. Cl.: G07F 13/10, G07F 7/06

(54) **Apparatus for the treatment of glasses, cups and the like**

(30) Priority: 20.11.1995 IT PN950060
(71) Applicant: Electrolux Zanussi Vending S.p.A., 24030 Valbremo, Bergamo (IT)
(72) Inventor: Val, Bruno, 31015 Conegliano, Treviso (IT)
(74) Representative: Giugni, Valter

(57) **Abstract**

Apparatus, preferably associated to vending machines, which comprises a loading arrangement (5) for dirty glasses, means (8) provided to wash said dirty glasses, means (9) provided to rinse them and means (10) provided to dry them, said apparatus being characterized in that it is provided with means (1) that are adapted to acknowledge the payment of a pledge in addition to the price paid for buying the beverage and, as a consequence, to trigger the corresponding release means (2) so as to issue just a single glass at a time. After drinking the beverage, the customer puts the dirty glass in the loading arrangement (5) where means (6) are provided to acknowledge the presence of the dirty glass and to correspondingly trigger means (7) adapted to automatically pay back the previously paid-in pledge to the customer.

## Description

The present invention refers to an apparatus for the treatment of drinking glasses, cups and the like in advance of their being used to drink beverages in premises that are open to the public, said apparatus comprising means adapted to receive the dirty glasses, as well as means adapted to wash, rinse and dry the same glasses.

As used in this context, the term "premises open to the public" shall be intended to mean and include such public-service houses as hotels, restaurants and the like, as well as schools, workplaces, hospitals, canteens and the like.

It is a commonly known fact that serving beverages in premises generally open to the public usually calls for the utilization of glasses, cups and similar containers made with such solid materials as ceramics or glass in order to be able to use them repeatedly after a due cleaning treatment. To such a purpose, use is largely made of appropriate warewashing apparatuses, which are basically similar to domestic dishwashers, the operation of which, although fully automatic, nevertheless requires the unavoidable presence of service personnel, if only to provide loading and unloading.

A definite advantage of vending machines, which have found a rapidly growing use also in schools, hospitals, working places and the like, lies in the fact that they do not require any service personnel to attend them on a continuous basis, ie. they are capable of operating unattended. Such vending machines make use of so-called single-use or throwaway cups, which are made of very light materials such as plastic sheet and cardboard so that they can be just thrown away after the beverage contained therein has been drunk up. These materials, albeit fully compatible with the hygiene and health requirements of the consumer, may not be absolutely inodorous. When filled with hot beverages, these cups tend to cause the consumer to get his or her fingers scalded, since they usually lack a handle enabling a convenient handgrip. All such drawbacks are readily perceived and lead a lot of people to simply refuse beverages dispensed by vending machines. Furthermore, there is another major problem, of an environmental nature, that needs being coped with at present in connection with the disposal of the used cups, which are usually just thrown into appropriate bags provided close by the same vending machines. These bags end then quite frequently up in the circuit of solid urban waste (whose dramatic environmental impact is generally well-known) or - in view of reducing their environmental impact - they are the object of a differentiated collection scheme aimed at recovering them in view of recycling their material or incinerating it under recovery of the thereby produced heat.

It is finally a generally known fact that law provisions and regulations are going to be introduced, even at an international level (eg. European Union Directives), which are aimed at minimizing the environmental impact of the products, in particular of those which are bound to turn themselves into waste after particularly short life cycles.

It therefore is a main purpose of the present invention to minimize the overall environmental impact of beverage vending machines through the use, in the production of the cups to be used in connection therewith, more appropriate materials that may also prove more acceptable to the consumers.

According to the present invention, this and further aims, as illustrated further on in this description, are reached in an apparatus that is characterized in that it further includes: means that are adapted to acknowledge the payment of a pre-determined amount of money by the consumer of the beverage; means that are adapted to allow the apparatus to issue just a single glass or cup at a time after said pre-determined amount of money has been paid in; means that are adapted to acknowledge the presence of a dirty glass or cup being replaced in the apparatus and to trigger means adapted to immediately pay back at least a part of said paid-in amount of money.

A preferred, although not exclusive embodiment of the present invention will be described in the following by way of non-limiting example with reference to the accompanying drawings, in which:
- Figure 1 is a block diagram illustrating the utilization and operation cycle of the apparatus as appropriately associated to an automatic vending machine;
- Figure 2 is a schematical overall view of the above cited apparatus;
- Figure 3 is a view of a particular construction of the glasses aimed at making it easier to treat them in the apparatus.

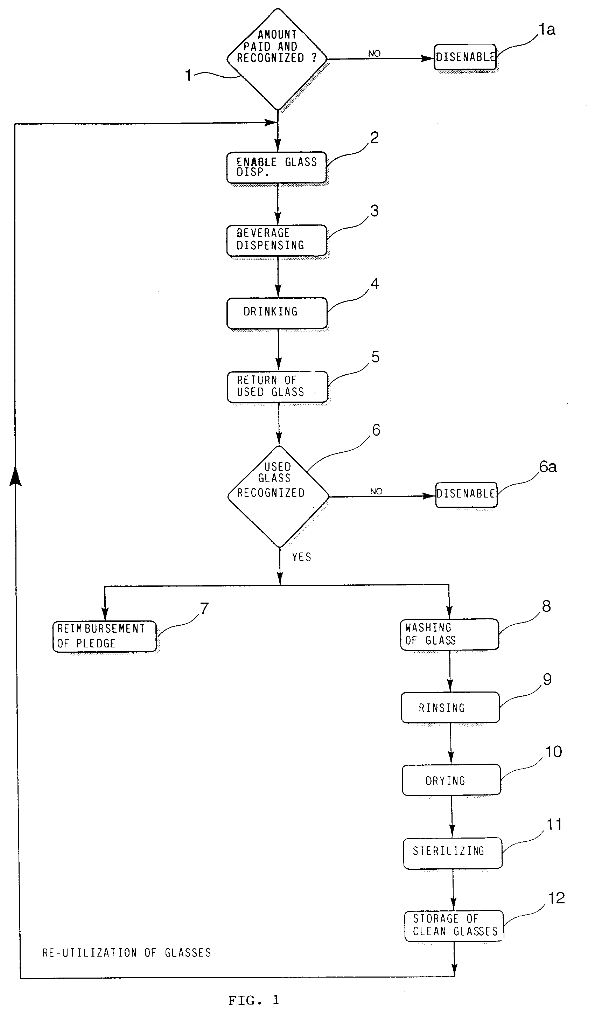

Assuming that the apparatus according to the present invention is associated to a beverage vending machine operated with the use of an electronic key, its operation, with particular reference to Figure 1, is as follows.

The consumer inserts the key in the appropriate apparatus which withdraws a pre-determined amount of money therefrom (step 1), said amount of money being inclusive, in addition to the price of the beverage, of a pledge. The ackowledgment of the paid-in amount of money causes a glass or cup to be issued (step 2) and the requested beverage to be dispensed by the vending machine (step 3). At this point the dispensed beverage is drunk by the consumer (step 4). It will of course be appreciated that, should the paid-in amount of money fail to be regularly acknowledged, the apparatus will not react at all or, at least, will refuse to dispense the beverage (step 1a).

Once the beverage has been drunk up by the consumer, according to a substantial feature of the present invention the consumer loads the used glass or cup into an appropriate portion of the apparatus (step 5), where means are provided to enable it to be recognized and the presence thereof to be correspondingly acknowledged (step 6).

As a result of such an acknowledgment, the amount of money that was previously paid-in as a pledge is immediately paid back to the consumer (step 7), for instance through a corresponding crediting entry to his or her electronic key. Such an immediate reimbursement of the pledge is certainly a major factor behind the consumer being encouraged to return the glass or cup into the apparatus, thereby fulfilling a precondition to a reuse of the same glass or cup.

It will be appreciated that the presence of such means adapted to recognize the dirty glass or cup is most becoming in view of avoiding swindles, such as for instance the use of different glasses or cups than those for which a pledge has been paid in. In the case of a failure of said means to recognize the proper glass or cup, the apparatus reacts by automatically disenable the reimbursement of the pledge (step 6a). Means may also be provided to cause the "false" glass or cup to be automatically ejected.

The apparatus is furthermore provided with means, which may on the other hand be of a generally *per sè* known type, to wash, rinse and dry said glasses or cups (steps 8, 9, 10) before their reuse. Most suitably there are also provided means, for instance of the type making use of dry aerosol, to sterilize said glasses or cups (step 11). The apparatus finally comprises means adapted to enable the clean glasses or cups to be piled in stacks (step 12) waiting for a new utilization (operation) cycle.

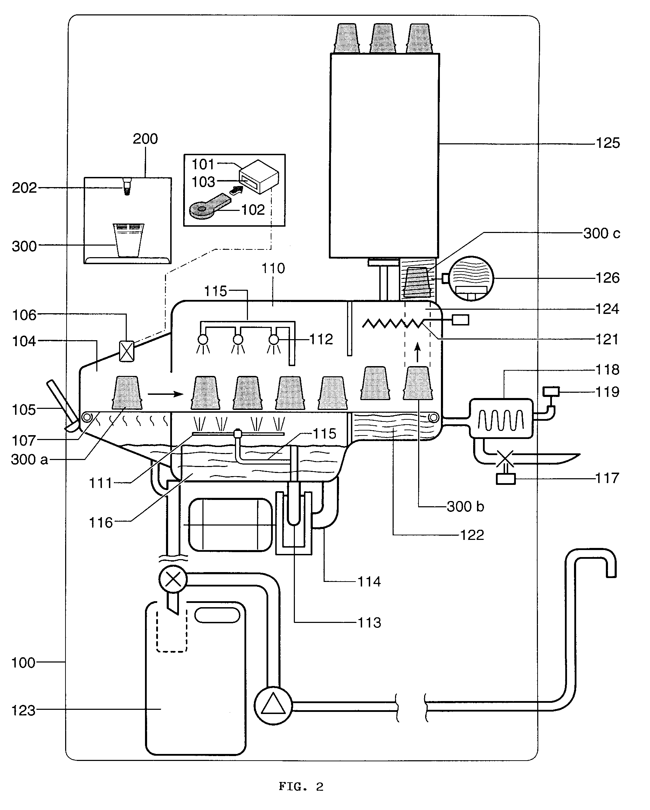

Referring now to Figure 2, it can be noticed that the apparatus 100 according to the present invention is shown to first of all comprise a digital reader means 101 for reading the data stored in an electronic key 102, said data containing information on an "electronic" credit which constituted by paying a certain amount of money in advance and decreases progressively as it is used up for buying beverages from a hot-beverage vending machine 200 that is associated to the apparatus 100. Upon introducing the key 102 in a decoder 103, the digital information reader means 101, which is appropriately programmed so as to deduct an amount constituted by the price of the beverage (eg. 500 Italian liras) and a pledge (eg. again 500 Italian liras), is activated. Once the payment of such amount is regularly acknowledged, a clean glass or cup 300 is automatically released from the storage 125 into the appropriate dispensing niche of the vending machine 200, into which a beverage dispensing tube 202 is led to open.

Using *per sè* known means and methods the beverage, as duly prepared in the vending machine 200, is then delivered into the glass or cup 300 through a spout 202. After drinking up his or her beverage, the consumer takes care to replace the used glass or cup 300bis, with its opening turned downwards, into a loading arrangement 104 which comprises a lid 105, an optical reader 106 adapted to read the special code 401 printed or otherwise provided on the bottom of the glass or cup, as this will be explained in greater detail further on. A portion of the programmed memory of the digital reader 101 is associated to and interlocked with the optical reader 106 so that, following the acknowledgment of the code 301 by the optical reader 106, the digital information carried by the electronic key 102, which in the meantime will have been introduced again in the decoder 103, is 'enriched' through the reimbursement of the pledge that was paid in when buying the beverage (ie. 500 Italian liras in the example considered here).

The apparatus 100 further comprises: horizontal conveyor means 107 driven by a stepping motor (not shown) and carrying in a stable manner the glasses or cups 300a that are arranged thereon with their opening turned downwards; a first compartment 110 where there are provided lower and upper spraying nozzles 111 and 112, resp., which are supplied by an electric recirculating pump 113 with both the wash liquor 116 and the rinse liquor through appropriate return and delivery conduits 114 and 115, resp.

The water needed for such a washing and rinsing operation is taken from the water supply mains through an electromagnetic valve 117; it is then heated up by a first thermostatically controlled electric heating element 118 and maintained at the correct level by means of a pressostat-type level control means 119.

In a second compartment 120, which is arranged immediately downstream of said first compartment 110, there is provided a second thermostatically controlled electric heating element 121 which heats up the air in said compartment and, as a result, dries the glass or cup 300b entering the same compartment. Therefore, condensate 122 tends to form and deposit on the bottom of the second compartment 120. In a most appropriate manner, in those countries where stricter regulations apply to water drainage systems, the wash liquor 116, as well as the rinse liquor and the condensate 122, will not be directly disposed off with the regular waste water of the public premises where the apparatus is installed, but are collected in an appropriate reservoir 123 which is arranged so that it is capable of being removed from the apparatus 100 for being emptied in full compliance with the applying regulations.

Downstream of the second compartment 122 there is provided a vertical conveyor means 124 that raises the dry glass or cup 300c and transfers it into the apparatus 125 that is used to store and dispense clean glasses or cups.

In order to give consumers a greater hygiene assurance, the glass or cup 300c is sterilized using a dry aerosol delivered by a *per sè* known generator 126, during its translation.

For reasons of greater simplicity a number of basically *per sè* known items which are not important to the actual purposes of the present invention, such as for instance the constructional items of the apparatus 125 and the means provided to enable each clean glass or cup 300, dispensed thanks to the digital reader 101, to be duly filled in the vending machine 200, have been omitted in this description and the accompanying drawings.

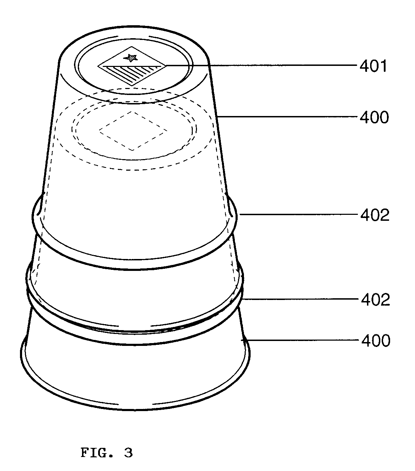

The apparatus according to the present invention suitably allows for the utilization of glasses or cups having following advantageous characteristics (see Figure 3): a construction using more compact, solid and valuable materials as compared to the ones used for traditional single-use glasses or cups (eg. glass, ceramics, engineering polymers and the like) since they are called to go through a practically unlimited number of reuses; the glasses or cups are provided with absolutely indelible means that enable them to be readily and automatically recognized in the apparatus, such as for instance a colour logo 401 applied on the bottom thereof so as to form an identification mark thereof; the glasses or cups are provided with pronounced peripheral ribs 402 that make it easier for them to be both firmly seized and held by the translation means 107, 124, as well as stacked in the storage and dispensing arrangement 125.

In addition to the afore described ones, further embodiments may be derived from the same inventive principles, thus falling within the scope of the present invention. In particular:
- the payment of the pledge (which may also occur separately from the payment of the purchase price of the beverage) may be made by any other means and methods generally used in connection with vending machines, ie. tokens, coins, cash, magnetic cards and the like; the same applies to the means and methods for the reimbursement of the pledge;
- a single apparatus according to the present invention may be associated to a plurality of vending machines installed in the same zone, such as for instance a canteen or similar catering establishment;
- by providing appropriate connections, the elements needed to supply the water and heat up the washing liquor may be the same used in the vending machine associated to the apparatus;
- instead of an optical reader to read the logo on the bottom of the glass or cup, other means may be used to recognize the glass or cup and, therefore, to enable the immediate reimbursement of the previously paid-in pledge.

## Claims

1. Apparatus for the treatment of drinking glasses, cups and the like in advance of their being used to drink beverages in premises that are open to the public, said apparatus comprising:
- means (5) adapted to receive the dirty glasses,
- means (8, 9, 10, 11) adapted to wash, rinse and dry the same glasses,
and being **characterized in that** it further comprises:
- means (1) that are adapted to acknowledge the payment of a pre-determined amount by the consumer/buyer of the beverage,
- means (2) that are adapted to enable just a single glass to be dispensed each time after said pre-determined amount has been paid in, and
- means (6) that are adapted to acknowledge the presence of the dirty glass in the loading means (5) and to correspondingly trigger means (7) that are adapted to automatically and immediately pay back at least part of the previously paid-in amount to the customer.

2. Apparatus according to claim 1, **characterized in that** it is associated to a beverage vending machine (200).

3. Apparatus according to claim 2, **characterized in that** the means (1) provided to acknowledge the payment of the pre-determined amount are adapted to cash in and permanently retain the actual price of the beverage, whereas the means (7) are adapted to automatically reimburse the amount of the pledge.

4. Apparatus according to any of the preceding claims, **characterized in that** it further comprises means (11) provided to sterilize the glasses, preferably using a dry aerosol of a *per sè* known type.

5. Apparatus according to claims 1 to 3, **characterized in that** it further comprises automatic means, which may also be of a generally *per sè* known type, to transfer the clean glasses into a storage and dispensing arrangement (125).

6. Apparatus according to any preceding claim, **characterized in that**, in a generally *per sè* known manner, the means provided to treat the dirty glasses comprise spray means (111, 112) with recirculation pumps (113) for the wash liquor (116) and the rinse liquor, an electromagnetic water-supply valve (117), and heating elements to heat up the water (118) and the drying air (121).

7. Apparatus according to any of the preceding claims, **characterized in that** the means (6) for the recognition of the dirty glasses are adapted to control means (6a) to automatically reject the same glasses and at the same time disenable the reimbursement of the pledge if said means fail to recognize said glasses.
